# DEMANDE DE BREVET EUROPEEN

(11) **EP 2 123 394 A1**
(43) Date de publication de la demande: **25.11.2009**
(21) Numéro de dépôt: 09160657.4
(22) Date de dépôt: 19.05.2009
(51) Int. Cl.: B23Q 3/08

(54) **Dispositif de maintien d'un lingot pour la réalisation de découpes**

(30) Priorité: 20.05.2008 FR 0853250
(71) Demandeur: Sermas Industrie, 38210 Saint Quentin sur Isère (FR)
(72) Inventeur: Schmitt, Bernard, 38690 Bevenais (FR)
(74) Mandataire: de Beaumont, Michel

(57) **Abrégé**

L'invention concerne un procédé de maintien temporaire d'un lingot solide (42) en faisant prendre le lingot dans un matériau de maintien (48) adapté à passer de façon réversible de l'état liquide à l'état solide, le matériau de maintien étant disposé à l'état liquide dans un bac (12), alors que le lingot est maintenu à distance du fond du bac, et étant amené à l'état solide.

## Description

### Domaine de l'invention

La présente invention concerne un dispositif de maintien d'un lingot, par exemple un lingot d'un matériau semiconducteur, pour une opération de découpe du lingot en blocs. Il s'agit par exemple d'un lingot de silicium destiné à la fabrication de cellules de production d'énergie électrique par effet photovoltaïque. Ce silicium de qualité supérieure au silicium métallurgique est généralement désigné sous le vocable silicium photovoltaïque (Solar Grade ou SoG en anglais).

### Exposé de l'art antérieur

Les procédés de fabrication de plaquettes de silicium photovoltaïque comprennent généralement les étapes consistant à former dans un creuset un lingot de silicium, puis à découper le lingot en blocs, par exemple par un dispositif de sciage à ruban. Il est nécessaire de maintenir convenablement le lingot lors de l'opération de sciage. En effet, plusieurs découpes successives doivent être généralement réalisées avec une précision élevée, par exemple le dixième de millimètre. Il est, en outre, souhaitable que la découpe d'un lingot en blocs soit la plus rapide possible. De ce fait, le maintien du lingot doit être réalisé une fois pour toute avant la réalisation des découpes sans devoir être modifié au fur et à mesure que les blocs sont découpés. En outre, le maintien du lingot ne doit pas gêner le déplacement de la lame de coupe du dispositif de sciage. De plus, il est souhaitable d'éviter la formation d'ébréchures lorsque la lame débouche du lingot.

Une difficulté provient du fait que, de part les procédés habituels de fabrication d'un lingot de silicium photovoltaïque, les faces du lingot n'ont généralement pas une forme parfaitement plane mais présentent des irrégularités qui varient d'un lingot à l'autre. Il n'est donc pas envisageable de maintenir le lingot en le mettant en appui contre un support plan (comprenant éventuellement des rainures pour le dégagement de la lame de coupe). En effet, seules certaines portions de la face du lingot appliquée contre le support plan sont alors effectivement en contact avec le support. En particulier, un bloc peut ne pas être au contact du support plan lorsqu'il est découpé et désolidarisé du reste du lingot. De ce fait, à la fin de l'opération de découpe, le bloc peut se déplacer pour venir en appui contre le support et entraîner le blocage de la lame de coupe et/ou une détérioration du lingot.

Une possibilité consiste à répartir des pions sur un support plan et à étaler sur le support un matériau de collage durcissable, par exemple une résine, du plâtre, etc. Le lingot est posé sur les pions en comprimant la colle, une zone remplie de colle étant maintenue entre le lingot et le support plan au moyen des pions. Une fois durcie, la colle épouse la forme du lingot et en assure le maintien. Le lingot peut alors être découpé, la zone remplie de colle prévue entre le support et le lingot permettant le dégagement de la lame de coupe.

Un inconvénient d'un tel dispositif de maintien est qu'il est nécessaire, une fois les blocs découpés, de nettoyer chaque bloc pour éliminer les morceaux du matériau durcissable collés au bloc. Ceci est généralement une opération longue et délicate. En outre, le matériau durcissable tend à encrasser la lame de coupe au cours du sciage du lingot.

### Résumé

Un aspect de l'invention vise un dispositif et un procédé de maintien d'un lingot, par exemple un lingot d'un matériau semiconducteur, lors d'une opération de découpe du lingot en blocs qui ne présente pas les inconvénients cités précédemment.

Ainsi, un mode de réalisation de la présente invention prévoit un procédé de maintien temporaire d'un lingot solide en faisant prendre le lingot dans un matériau de maintien adapté à passer de façon réversible de l'état liquide à l'état solide, le matériau de maintien étant disposé à l'état liquide dans un bac, alors que le lingot est maintenu à distance du fond du bac, et étant amené à l'état solide.

Selon un mode de réalisation de la présente invention, le procédé comprend les étapes consistant à poser le lingot sur des entretoises disposées dans le bac ; à disposer le matériau à l'état liquide dans le bac, le matériau venant en contact avec le lingot ; à amener le matériau de l'état liquide à l'état solide pour maintenir le lingot ; à découper le lingot en blocs ; et à amener le matériau de l'état solide à l'état liquide.

Selon un mode de réalisation de la présente invention, le bac comprend une plaque de fond sur laquelle sont disposées les entretoises et des plaques latérales mobiles par rapport à la plaque de fond, le procédé comprenant, en outre, les étapes consistant à amener les plaques latérales à une première position dans laquelle les plaques latérales et la plaque de fond forment un conteneur étanche lorsque le matériau est disposé à l'état liquide dans le bac ; et à amener au moins deux plaques latérales opposées parmi les plaques latérales à une seconde position dans laquelle les plaques latérales opposées n'entourent pas les entretoises lors de la réalisation des découpes.

Un autre mode de réalisation de la présente invention prévoit un dispositif pour le maintien temporaire d'un lingot solide, comprenant un bac destiné à contenir un matériau adapté à passer de façon réversible d'un état liquide à un état solide ; un échangeur thermique destiné à échanger des calories avec le matériau ; et des moyens pour maintenir le lingot à distance du fond du bac lorsque le lingot est pris par le matériau amené de l'état liquide à l'état solide.

Selon un mode de réalisation de la présente invention, le bac comprend une plaque de fond sur laquelle sont disposées des entretoises et des plaques latérales mobiles par rapport à la plaque de fond entre une première position dans laquelle les plaques latérales et la plaque de fond forment un conteneur étanche destiné à recevoir le matériau à l'état liquide et une seconde position dans laquelle les plaques latérales n'entourent pas les entretoises.

Selon un mode de réalisation de la présente invention, le matériau a une température de solidification comprise entre -5°C et 40°C.

Selon un mode de réalisation de la présente invention, le matériau appartient à la liste comprenant une solution aqueuse contenant éventuellement des additifs, un matériau à base de cire et un matériau à base de paraffine.

Selon un mode de réalisation de la présente invention, l'échangeur thermique comprend un tube serpentant au niveau du bac et dans lequel circule un fluide frigorigène.

Selon un mode de réalisation de la présente invention, l'échangeur thermique comprend une résistance chauffante.

Un autre mode de réalisation de la présente invention prévoit une installation de découpe d'un lingot solide en blocs, comprenant un dispositif de maintien du lingot tel que défini précédemment ; et un dispositif de découpe du lingot maintenu par le dispositif de maintien.

Selon un mode de réalisation de la présente invention, le dispositif de coupe est un dispositif de sciage à ruban, à lame circulaire ou à fil.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
les figures 1 et 2 représentent, de façon schématique, un dispositif de maintien d'un lingot selon un exemple de réalisation de la présente invention dans deux configurations d'utilisation différentes ;
les figures 3A à 3K sont des coupes et des vues en perspective schématiques et partielles d'une installation de découpe comprenant le dispositif de maintien des figures 1 et 2 à des étapes successives d'une opération de découpe d'un lingot ; et
les figures 4 et 5 représentent deux dispositifs de maintien d'un lingot selon d'autres exemples de réalisation de la présente invention.

### Description détaillée

Par souci de clarté, de mêmes éléments ont été désignés par de mêmes références aux différentes figures.

La présente invention prévoit d'utiliser, pour assurer le maintien d'un lingot à découper, un matériau de maintien susceptible de passer, de façon réversible, d'un état liquide à un état solide. Le matériau de maintien est mis en place à l'état liquide pour épouser la forme du lingot et est amené de l'état liquide à l'état solide de façon que le lingot soit pris dans le matériau de maintien et maintenu par celui-ci lors de la réalisation des découpes. Le matériau de maintien est alors ramené à l'état liquide pour libérer les blocs découpés. Dans la suite de la description, lorsqu'il est fait référence au matériau de maintien, l'état liquide englobe des états dans lequel le matériau de maintien est plus ou moins pâteux ou visqueux. La température de solidification du matériau de maintien est de préférence proche de la température ambiante, la différence entre la température de solidification du matériau de maintien et la température ambiante étant, par exemple, inférieure à 50 degrés. A titre d'exemple, la température de solidification du matériau de maintien est comprise entre -5°C et 40°C. De ce fait, la conservation du matériau de maintien à l'état solide ou liquide n'entraîne pas une consommation excessive d'énergie. Le matériau de maintien étant ramené à l'état liquide pour la libération des blocs, le nettoyage final des blocs est facilité.

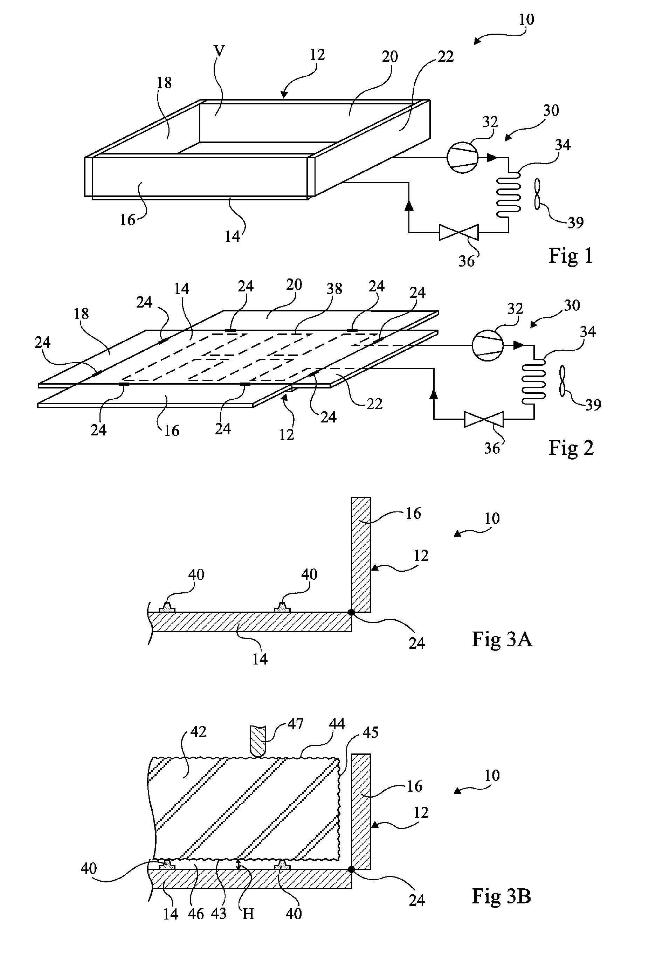

Les figures 1 et 2 représentent un dispositif de maintien 10 selon un exemple de réalisation de la présente invention. Le dispositif de maintien 10 comprend un bac 12 constitué d'une plaque plane 14 formant le fond du bac 12 et de quatre plaques planes latérales 16, 18, 20, 22. Les plaques latérales 16, 18, 20, 22 sont reliées de façon pivotante à la plaque de fond 14 par l'intermédiaire de charnières 24 et peuvent être déplacées, séparément ou simultanément, entre une position repliée, représentée en figure 1, et une position déployée, représentée en figure 2. Le système d'actionnement des plaques 16, 18, 20, 22 entre les positions repliée et déployée n'est pas représenté. Les plaques latérales 16, 18, 20, 22 sont reliées de façon étanche à la plaque de fond 14. Lorsque toutes les plaques latérales 16, 18, 20, 22 sont en position repliée, chaque plaque 16, 18, 20, 22 est en contact sensiblement étanche avec deux autres plaques latérales adjacentes, les plaques latérales 16, 18, 20, 22 formant alors avec la plaque de fond 14 un récipient susceptible de contenir un matériau liquide. En position déployée, chaque plaque 16, 18, 20, 22 s'étend, par exemple, sensiblement de façon coplanaire avec la plaque de fond 14.

Dans le présent exemple de réalisation, le dispositif de maintien 10 comprend une machine frigorifique 30 représentée de façon schématique. La machine frigorifique 30 comprend une boucle de circulation d'un fluide frigorigène comprenant successivement un compresseur 32, un premier échangeur 34, un détenteur 36 et un second échangeur 38. L'échangeur 38, représenté seulement en figure 2 en traits pointillés, peut, au moins en partie, être incorporé à la plaque de fond 14. L'échangeur 38 joue le rôle d'un évaporateur et l'échangeur 34 joue le rôle d'un condenseur. L'échangeur 34 peut être associé à un système de ventilation 39. L'évaporateur 38 peut comprendre un tube, dans lequel circule le fluide frigorigène, qui serpente au niveau de la plaque de fond 14. Selon une variante, le tube 38 serpente également au niveau des plaques latérales 16, 18, 20, 22. Le fonctionnement de la machine frigorifique 30 est le suivant. Le fluide frigorigène à faible pression est évaporé dans l'évaporateur 38 par prélèvement de calories au milieu extérieur. Le fluide frigorigène à l'état gazeux est alors comprimé par le compresseur 32 puis est amené à l'état liquide par le condenseur 34. Le fluide frigorigène libère alors de la chaleur évacuée par le système de ventilation 39. Le détendeur 36 abaisse la pression du fluide frigorigène qui est partiellement vaporisé.

Les figures 3A à 3K sont des coupes et des vues en perspective partielles et schématiques d'une installation de découpe comprenant le dispositif de maintien 10 des figures 1 et 2, à des étapes successives de découpe d'un lingot.

La figure 3A représente l'installation de découpe après avoir amené les plaques latérales 16, 18, 20, 22 du dispositif de maintien 10 en position repliée et après avoir disposé un nombre réduit de pions 40, par exemple trois ou quatre pions, sur la plaque de fond 14. A titre d'exemple, la plaque de fond 14 peut être au moins en partie constituée d'un métal ou d'un alliage métallique et chaque pion 40 peut comprendre un insert magnétique. Les pions 40 peuvent alors être positionnés librement sur la plaque de fond 14. Une fois mis en place, les pions 40 sont maintenus en position sous l'action de forces magnétiques.

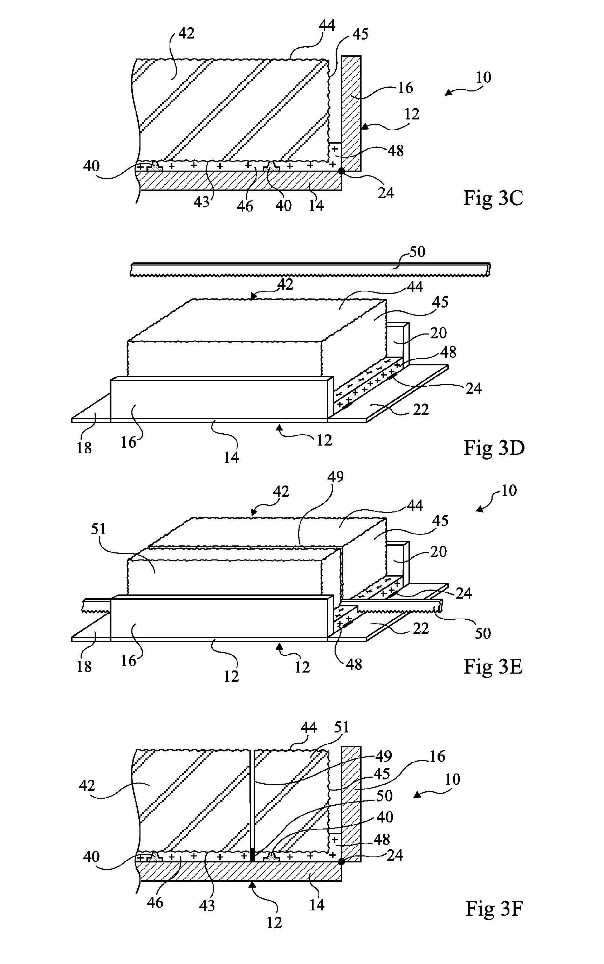

La figure 3B représente l'installation de découpe après avoir mis en place un lingot 42, par exemple un lingot de silicium photovoltaïque, dans le bac 12. Le lingot 42 comprend une face inférieure 43 en appui sur les pions 40, une face supérieure 44 opposée à la face inférieure 43 et des faces latérales 45 reliant la face inférieure 43 à la face supérieure 44. Les pions 40 définissent une zone de dégagement 46 entre la face inférieure 43 et la plaque de fond 14 dont la hauteur H peut être de l'ordre de 5 à 20 mm. Le dispositif de déplacement du lingot 42 n'est pas représenté. Une fois le lingot 42 en appui sur les pions 40, une pression peut être exercée sur la face supérieure 44 du lingot 42 par l'intermédiaire d'un système de maintien supérieur, comprenant par exemple des vérins 47, un seul vérin 47 étant représenté en figure 3B, ce vérin 47 n'étant pas représenté sur les figures 3C à 3K.

La figure 3C représente l'installation de découpe après avoir partiellement rempli le bac 12 d'un matériau de maintien 48 à l'état liquide. Dans le présent exemple de réalisation, le matériau 48 est de préférence à l'état liquide à température ambiante. Il s'agit, par exemple, d'eau dans laquelle des additifs peuvent être dissous. Le matériau 48 se répand notamment sous le lingot 42, entre les pions 40, et sur une partie des faces latérales 45 du lingot 42. En particulier, le matériau 48 se répand au contact de la totalité de la face inférieure 43 du lingot 42.

Selon une variante du procédé décrit précédemment, aux étapes décrites en relation avec les figures 3B et 3C, le matériau de maintien 48 est disposé dans le bac 12 avant la mise en place du lingot 42.

La figure 3D représente l'installation de découpe après avoir refroidi suffisamment le matériau 48 pour le faire passer de l'état liquide à l'état solide et après avoir amené les plaques latérales 18, 22 de la position repliée à la position déployée, les plaques latérales 16, 20 étant maintenues en position repliée. Le lingot 42 est alors maintenu par le matériau 48 à l'état solide. La solidification du matériau 48 et la conservation du matériau 48 à l'état solide sont réalisées par la machine frigorifique 30, l'évaporateur 38 extrayant des calories du matériau 48 lorsque la machine frigorifique 30 est en fonctionnement. En figure 3D, on a représenté partiellement une lame de coupe 50 d'un dispositif de sciage.

Les figures 3E et 3F représentent respectivement une vue en perspective et une coupe de l'installation de découpe après avoir réalisé une découpe 49 dans le lingot 42 au moyen de la lame 50. Comme cela est plus particulièrement visible en figure 3F, la lame de coupe 50 a pénétré dans le matériau solide 48 dans la zone de dégagement 46. De ce fait, la découpe 49 s'étend de la face supérieure 44 à la face inférieure 43 du lingot 42 et délimite une première portion 51 séparée du reste du lingot 42. La lame de coupe 50 peut correspondre à un fil diamant, à une scie à ruban, à une lame circulaire, etc. Les pions 40 sont répartis sur la plaque de fond 14 de façon à ne pas gêner le passage de la lame de coupe 50. La lame de coupe 50 pénétrant dans le matériau de maintien 48 à l'état solide, on évite ainsi la formation d'ébréchures du côté de la face inférieure 43.

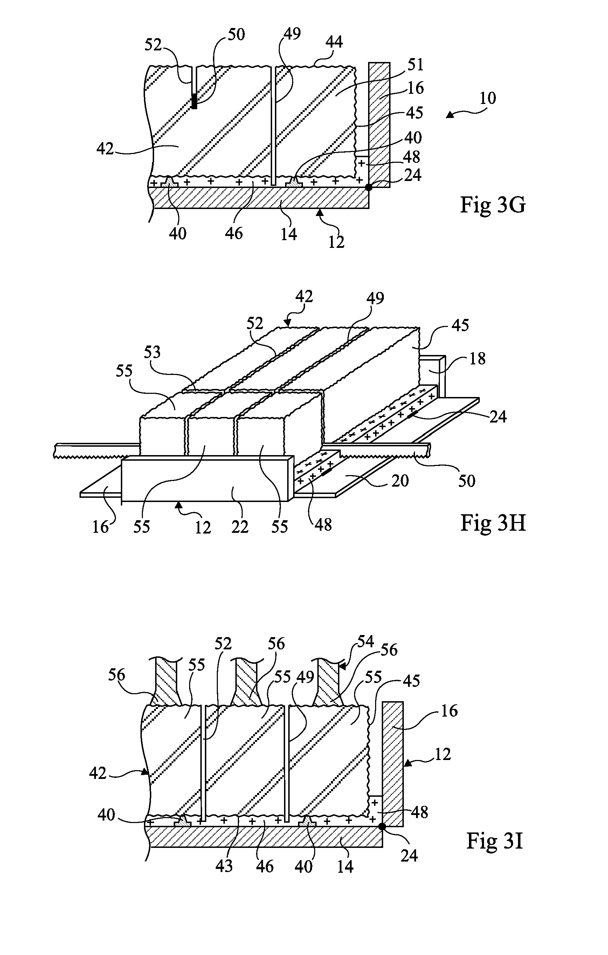

La figure 3G représente l'installation de découpe alors qu'une découpe supplémentaire 52 est en train d'être réalisée dans le lingot 42 par la lame 50. La première portion 51 est maintenue en position par le matériau solide 48, et éventuellement par le système de maintien supérieur 47, non représenté, tout au long de la réalisation de la découpe 52. Lorsqu'un système de maintien supérieur 47 est présent, celui-ci est constitué d'éléments escamotables qui sont mis en place et retirés au fur et à mesure de la réalisation des découpes pour permettre le passage de la lame de coupe 50.

La figure 3H représente l'installation après les étapes suivante :
déplacement des plaques latérales 18, 22 de la position déployée à la position repliée ;
déplacement des plaques latérales 16, 20 de la position repliée à la position déployée ;
déplacement du bac 12 par rapport au dispositif de sciage de façon que la lame de coupe 50 s'étende perpendiculairement au plan des découpes 49, 52 ; et
réalisation d'une découpe supplémentaire 53 dans le lingot 42.

Le déplacement du bac 12 par rapport au dispositif de sciage peut être réalisé en disposant le bac 12 sur un plateau tournant que l'on fait pivoter de 90°. A titre de variante, le bac 12 peut être disposé sur un plateau fixe, le dispositif de sciage pivotant par rapport au plateau. Dans le présent exemple de réalisation, la découpe 49 permet de délimiter trois blocs 55 dans le lingot 42, le nombre de blocs étant adapté à l'application visée.

La figure 3I représente l'installation de découpe après les étapes suivante :
réalisation de toutes les découpes dans le lingot 42 pour définir des blocs 55, ceux-ci étant maintenus par le matériau solide 48 ;
déplacement des plaques latérales 16, 18, 20, 22 de la position déployée à la position repliée ; et
mise en place d'un système de saisie 54 des blocs 55 .
A titre d'exemple, le système de saisie 54 comprend un ensemble de ventouses 56, chaque ventouse 56 étant appliquée sur la face supérieure 44 de l'un des blocs 55.

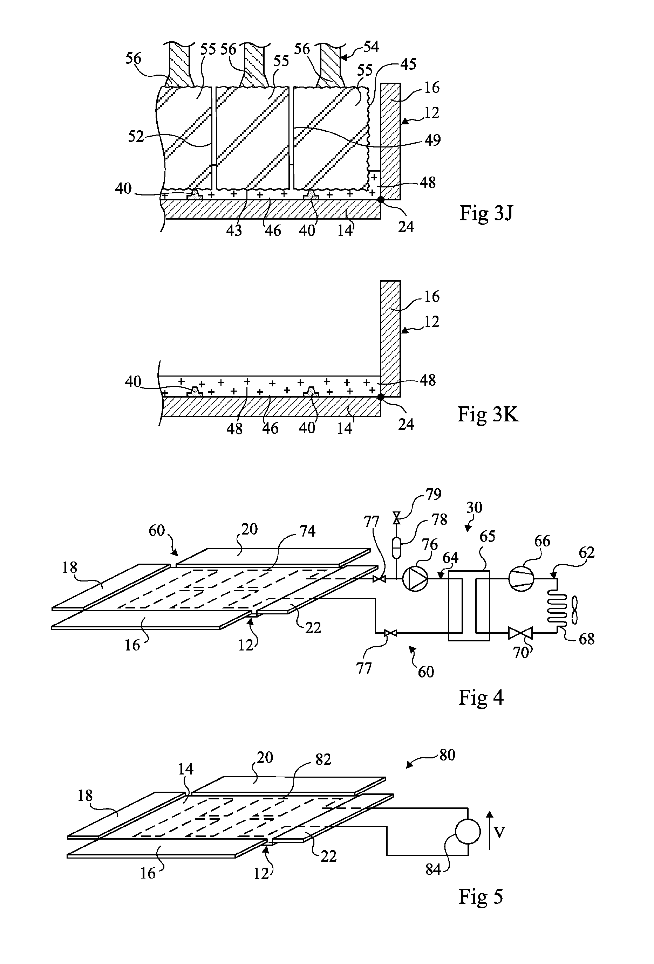

La figure 3J représente l'installation de découpe après avoir amené le matériau 48 de l'état solide à l'état liquide. Dans le présent exemple de réalisation, ceci peut être obtenu par l'arrêt de la machine frigorifique 30. Les blocs 55 ne sont alors plus maintenus par le matériau 48 mais seulement par le système de saisie 54.

La figure 3K représente l'installation de découpe après avoir retiré les blocs 55 du bac 12. Le matériau 48 peut alors subir un traitement en vue d'être réutilisé lors d'une prochaine opération de découpe.

Selon une variante du procédé décrit précédemment, aux étapes décrites en relation avec les figures 3I et 3J, les parois latérales 16, 18, 20, 22 sont toutes amenées en position déployée de façon que, lorsque le matériau 48 est amené de l'état solide à l'état liquide, il s'évacue par gravité.

La figure 4 est une vue analogue à la figure 2 d'un autre exemple de réalisation d'un dispositif de maintien 60 selon l'invention. Le dispositif de maintien 60 comprend l'ensemble des éléments du dispositif 10 à la différence que la machine frigorifique 30 comprend une machine frigorifique principale 62 et un système de refroidissement secondaire 64 reliés au niveau d'un échangeur 65. La machine frigorifique principale 62 comprend une boucle de circulation d'un fluide frigorigène comprenant successivement un compresseur 66, un condenseur 68, un détenteur 70 et un évaporateur faisant partie de l'échangeur 65. Le système de refroidissement secondaire 64 comprend un circuit de refroidissement d'un liquide caloporteur comprenant une pompe 76 et un échangeur faisant partie de l'échangeur 65. Le système de refroidissement secondaire 64 peut être connecté à un échangeur 74 présent au niveau de la plaque de fond 14 par l'intermédiaire de raccords rapides 77. L'échangeur 74 a, par exemple, la même structure que l'échangeur 38 représenté en figure 2. Le système de refroidissement secondaire 64 comprend, en outre, un vase d'expansion et de remplissage 78 muni d'une vanne de remplissage 79 pour compenser les fuites éventuelles du liquide caloporteur lors des opérations de raccordement et de désaccouplement entre le système de refroidissement secondaire 64 et l'échangeur 74 du bac 12. En fonctionnement, le liquide caloporteur circulant dans le système de refroidissement 64 est refroidi au niveau de l'échangeur 65 par évaporation du fluide frigorigène de la machine frigorifique 62. Le liquide caloporteur est réchauffé au niveau de l'échangeur 74 par prélèvement de calories au milieu extérieur. L'ensemble formé par le système de refroidissement secondaire 64 et la machine frigorifique 62 n'est pas solidaire du bac 12 et peut en être séparé au niveau des raccords rapides 77.

L'ensemble formé par le système de refroidissement secondaire 64 et la machine frigorifique 62 n'étant pas solidaire du bac 12, le bac 12 peut être facilement déplacé. Le présent exemple de réalisation permet de prévoir une installation de découpe dans laquelle au moins des premier et second ensembles comprenant chacun un système de refroidissement secondaire 64 et une machine frigorifique 62 sont prévus, le bac 12 pouvant être déplacé du premier ensemble au second ensemble. La machine frigorifique du premier ensemble est à forte puissance de refroidissement, le bac 12 étant raccordé au premier ensemble pour amener le matériau 48 de l'état liquide à l'état solide. La machine frigorifique du second ensemble a une puissance de refroidissement moins importante. Le bac 12 est alors raccordé au second ensemble, lors de la réalisation des découpes 49, 52, pour maintenir le fluide 48 à l'état solide. Lorsque l'installation de découpe ne comprend qu'un seul dispositif de sciage, l'utilisation de plusieurs bacs 12 permet d'assurer une production continue.

Les exemples de réalisation décrits précédemment mettent en oeuvre une machine frigorifique pour le refroidissement du matériau de maintien 48. Toutefois, il est clair que le matériau de maintien 48 peut être amené de l'état liquide à l'état solide par tout procédé de refroidissement adapté. Il s'agit, par exemple, d'un refroidissement par jet d'azote liquide, par le placement du bac 12 contenant le lingot 42 et le matériau de maintien 48 dans une enceinte refroidie (chambre froide, congélateur, etc.).

Les exemples de dispositifs de maintien décrits précédemment sont adaptés à un matériau de maintien 48 qui est à l'état liquide à température ambiante. Il s'agit par exemple d'une solution aqueuse comprenant des additifs pour fixer la température de solidification à la valeur souhaitée. En outre, lorsque le matériau de maintien 48 est sous forme de glace, il permet avantageusement d'assurer un nettoyage de la lame de coupe 50 pendant la réalisation des découpes. De plus, lorsque le matériau 48 est amené de l'état solide à l'état liquide, celui-ci peut facilement être traité pour récupérer les déchets issus de la découpe du lingot 42. Ceci permet de réutiliser le matériau de maintien 48 et de prévoir, éventuellement, un recyclage des déchets. En outre, le refroidissement de la lame de coupe 50 est généralement réalisé par aspersion d'eau liquide sur la lame de coupe 50 lors de la réalisation des découpes. Lorsque le matériau de maintien 48 est une solution aqueuse, son utilisation est directement compatible avec le liquide de refroidissement de la lame de coupe 50.

La figure 5 représente un dispositif de maintien 80 selon un autre exemple de réalisation de l'invention adapté au cas où le matériau de maintien 48 est à l'état solide à température ambiante. Il s'agit, par exemple, d'un matériau à base de paraffine ou de cire. Le dispositif 80 comprend un système de chauffage comprenant, par exemple, une résistance 82 ayant la forme d'un filament serpentant au niveau de la plaque de fond 14 et, éventuellement des plaques latérales 16, 18, 20, 22. La résistance 82 est connectée à des bornes d'extrémité à une source d'énergie 84, par exemple une source de tension V. L'utilisation du dispositif de maintien 80 est similaire à ce qui a été décrit précédemment pour le dispositif de maintien 10 en relation avec les figures 3A à 3K à la différence que le bac 12 est chauffé par le système de chauffage 82 pour amener le matériau 48 de l'état solide à l'état liquide et pour maintenir le matériau 48 à l'état liquide, le système de chauffage 82 étant interrompu pour amener le matériau de maintien 48 de l'état liquide à l'état solide.

Le dispositif de maintien 10 ou 30 peut également comprendre un système de chauffage du matériau 48 qui est alors utilisé pour accélérer le passage du matériau 48 de l'état solide à l'état liquide. De façon analogue, le dispositif de maintien 80 peut également comprendre un système de refroidissement du matériau de maintien 48 qui est alors utilisé pour accélérer le passage du matériau 48 de l'état liquide à l'état solide.

Si le matériau de maintien 48 assure une prise suffisante du lingot 42 lors de la réalisation des découpes 49, 52, le système de maintien supérieur 47 peut ne pas être présent.

Des modes de réalisation particuliers de la présente invention ont été décrits. Diverses variantes et modifications apparaîtront à l'homme de l'art. En particulier, bien que l'invention ait été décrite pour la découpe d'un lingot de silicium en blocs, il est clair que la présente invention s'applique à la découpe de n'importe quel lingot d'un matériau solide. En outre, dans les exemples décrits précédemment, le lingot est maintenu à distance de la plaque de fond du bac par des entretoises. Toutefois, le lingot peut être maintenu à distance de la plaque de fond par n'importe quel moyen. A titre d'exemple, le lingot peut être maintenu à distance du fond par un système de saisie à ventouse le temps que le matériau de maintien soit amené de l'état liquide à l'état solide.

## Revendications

1. Procédé de découpe d'un lingot solide (42) en faisant prendre le lingot dans un matériau de maintien (48) adapté à passer de façon réversible de l'état liquide à l'état solide, le matériau de maintien étant disposé à l'état liquide dans un bac (12), alors que le lingot est maintenu à distance du fond du bac, et étant amené à l'état solide, et en découpant le lingot par sciage selon une tranchée verticale s'arrêtant dans ledit matériau à l'état solide.

2. Procédé selon la revendication 1, comprenant les étapes suivante :
poser le lingot sur des entretoises (40) disposées dans le bac (12) ;
disposer le matériau à l'état liquide dans le bac, le matériau venant en contact avec le lingot ;
amener le matériau de l'état liquide à l'état solide pour maintenir le lingot ;
découper le lingot en blocs (55) ; et
amener le matériau de l'état solide à l'état liquide.

3. Procédé selon la revendication 2, dans lequel le bac (12) comprend une plaque de fond (14) sur laquelle sont disposées les entretoises (40) et des plaques latérales (16, 18, 20, 22) mobiles par rapport à la plaque de fond, le procédé comprenant, en outre, les étapes suivante :
amener les plaques latérales à une première position dans laquelle les plaques latérales et la plaque de fond forment un conteneur étanche lorsque le matériau (48) est disposé à l'état liquide dans le bac ; et
amener au moins deux plaques latérales opposées parmi les plaques latérales à une seconde position dans laquelle les plaques latérales opposées n'entourent pas les entretoises lors de la réalisation des découpes (49, 52).

4. Dispositif (10 ; 60 ; 80) de découpe d'un lingot solide (42), comprenant :
un bac (12) destiné à contenir un matériau (48) adapté à passer de façon réversible d'un état liquide à un état solide ;
un échangeur thermique (38 ; 74 ; 82) destiné à échanger des calories avec le matériau ;
des moyens (40) pour maintenir le lingot à distance du fond du bac lorsque le lingot est pris par le matériau amené de l'état liquide à l'état solide; et
un dispositif (50) de découpe du lingot selon des tranchées verticales.

5. Dispositif (10 ; 60 ; 80) selon la revendication 4, dans lequel le bac (12) comprend une plaque de fond (14) sur laquelle sont disposées des entretoises (40) et des plaques latérales (16, 18, 20, 22) mobiles par rapport à la plaque de fond entre une première position dans laquelle les plaques latérales et la plaque de fond forment un conteneur étanche destiné à recevoir le matériau (48) à l'état liquide et une seconde position dans laquelle les plaques latérales n'entourent pas les entretoises.

6. Dispositif selon la revendication 4 ou 5, dans lequel le matériau (48) a une température de solidification comprise entre -5°C et 40°C.

7. Dispositif selon l'une quelconque des revendications 4 à 6, dans lequel le matériau (48) appartient à la liste comprenant une solution aqueuse contenant éventuellement des additifs, un matériau à base de cire et un matériau à base de paraffine.

8. Dispositif selon l'une quelconque des revendications 4 à 7, dans lequel l'échangeur thermique (38 ; 74) comprend un tube serpentant au niveau du bac (12) et dans lequel circule un fluide frigorigène.

9. Dispositif selon l'une quelconque des revendications 4 à 7, dans lequel l'échangeur thermique (82) comprend une résistance chauffante.

10. Dispositif selon l'une quelconque des revendications 4 à 9, dans lequel le dispositif de découpe est un dispositif de sciage à ruban, à lame circulaire ou à fil (50).

## Revendications modifiées

### Revendications modifiées conformément à la règle 137(2) CBE.

**1.** Procédé de découpe d'un lingot solide (42) en faisant prendre le lingot dans un matériau de maintien (48) adapté à passer de façon réversible de l'état liquide à l'état solide, le matériau de maintien étant disposé à l'état liquide dans un bac (12) à fond plat, alors que le lingot est maintenu à distance du fond du bac, et étant amené à l'état solide, et en découpant le lingot par sciage selon une tranchée verticale s'arrêtant dans ledit matériau à l'état solide.

**2.** Procédé selon la revendication 1, comprenant les étapes suivantes :
poser le lingot sur des entretoises (40) disposées dans le bac (12) ;
disposer le matériau à l'état liquide dans le bac, le matériau venant en contact avec le lingot ;
amener le matériau de l'état liquide à l'état solide pour maintenir le lingot ;
découper le lingot en blocs (55) ; et
amener le matériau de l'état solide à l'état liquide.

**3.** Procédé selon la revendication 2, dans lequel le bac (12) comprend une plaque de fond (14) sur laquelle sont disposées les entretoises (40) et des plaques latérales (16, 18, 20, 22) mobiles par rapport à la plaque de fond, le procédé comprenant, en outre, les étapes suivantes :
amener les plaques latérales à une première position dans laquelle les plaques latérales et la plaque de fond forment un conteneur étanche lorsque le matériau (48) est disposé à l'état liquide dans le bac ; et
amener au moins deux plaques latérales opposées parmi les plaques latérales à une seconde position dans laquelle les plaques latérales opposées n'entourent pas les entretoises lors de la réalisation des découpes (49, 52).

**4.** Dispositif (10 ; 60 ; 80) de découpe d'un lingot solide (42), comprenant :
un bac (12) destiné à contenir un matériau (48) adapté à passer de façon réversible d'un état liquide à un état solide ;
un échangeur thermique (38 ; 74 ; 82) destiné à échanger des calories avec le matériau ;
des moyens (40) pour maintenir le lingot à distance du fond du bac lorsque le lingot est pris par le matériau amené de l'état liquide à l'état solide; et
un dispositif (50) de découpe du lingot selon des tranchées verticales.

**5.** Dispositif (10 ; 60 ; 80) selon la revendication 4, dans lequel le bac (12) comprend une plaque de fond (14) sur laquelle sont disposées des entretoises (40) et des plaques latérales (16, 18, 20, 22) mobiles par rapport à la plaque de fond entre une première position dans laquelle les plaques latérales et la plaque de fond forment un conteneur étanche destiné à recevoir le matériau (48) à l'état liquide et une seconde position dans laquelle les plaques latérales n'entourent pas les entretoises.

**6.** Dispositif selon la revendication 4 ou 5, dans lequel le matériau (48) a une température de solidification comprise entre -5°C et 40°C.

**7.** Dispositif selon l'une quelconque des revendications 4 à 6, dans lequel le matériau (48) appartient à la liste comprenant une solution aqueuse contenant éventuellement des additifs, un matériau à base de cire et un matériau à base de paraffine.

**8.** Dispositif selon l'une quelconque des revendications 4 à 7, dans lequel l'échangeur thermique (38 ; 74) comprend un tube serpentant au niveau du bac (12) et dans lequel circule un fluide frigorigène.

**9.** Dispositif selon l'une quelconque des revendications 4 à 7, dans lequel l'échangeur thermique (82) comprend une résistance chauffante.

**10.** Dispositif selon l'une quelconque des revendications 4 à 9, dans lequel le dispositif de découpe est un dispositif de sciage à ruban, à lame circulaire ou à fil (50).
